# EUROPEAN PATENT APPLICATION

(11) **EP 4 764 507 A1**
(43) Date of publication of application: **24.06.2026**
(21) Application number: 24910577.6
(22) Date of filing: 03.12.2024
(51) Int. Cl.: G01N 35/10

(54) **SUBSTRATE BOTTLE LOADING MECHANISM AND METHOD**

(30) Priority: 29.12.2023 CN 202311870286
(71) Applicant: Shenzhen Increcare Biotech Co., Ltd, Shenzhen, Guangdong 518055 (CN)
(72) Inventor: HE, Chongdong, Dongguan, Guangdong 523808 (CN); MIN, Jiali, Dongguan, Guangdong 523808 (CN); ZHANG, Zhen, Dongguan, Guangdong 523808 (CN)
(74) Representative: EDP Patent Attorneys B.V.
(86) International application number: PCT/CN2024/136496
(87) International publication number: WO 2025/139645

(57) **Abstract**

The present invention provides a substrate bottle loading mechanism and method. The substrate bottle loading mechanism includes: a bracket, wherein the bracket is provided with an accommodating groove configured to accommodate a substrate bottle; a liquid absorbing rod assembly, wherein the liquid absorbing rod assembly is connected to the bracket in a lifting manner, and at least a part of the liquid absorbing rod assembly extends into the substrate bottle to perform a liquid absorbing operation; a position detection element, wherein the position detection element is disposed on the liquid absorbing rod assembly and is configured to detect whether the substrate bottle is located in the accommodating groove; and a reading and writing assembly, wherein the substrate bottle is provided with an electronic tag, the reading and writing assembly is disposed corresponding to the electronic tag, and after the substrate bottle is placed in the accommodating groove, the reading and writing assembly reads a substrate information stored in the electronic tag. The present invention solves the problem of relatively low substrate bottle loading efficiency in related art.

## Description

### Cross-Reference to Related Application

The present invention claims priority and the benefit of Chinese Patent Application No. 202311870286.4, filed with the China National Intellectual Property Administration (CNIPA) on 29 December 2023, and entitled "Substrate Bottle Loading Mechanism and Method", which is herein incorporated by reference in its entirety.

### Technical Field

The present invention relates to the technical field of devices for in vitro diagnosis, and in particular to a substrate bottle loading mechanism and method.

### Background

In an existing in vitro diagnostic analyzer, a substrate is an essential part in a test. At present, substrate bottle loading requires the use of a matched handheld barcode scanner for scanning and loading. Barcode scanning is sensitive to ambient light, and too bright or too dark ambient light may cause barcode scanning failure, resulting in low scanning accuracy and low efficiency. A substrate bottle usually has multiple barcodes, which may easily lead to scanning errors and result in the substrate not being loaded during manual scanning. Substrate loading usually takes a lot of time, which affects the efficiency of the entire test. In addition, after scanning and loading through barcodes, it is impossible to determine whether the substrate bottle is really placed in a designated position during the test process. For example, it is impossible to determine whether the substrate bottle is forgotten to be placed after scanning or taken out midway after being placed, which may affect the test results.

### Summary

The main objective of the present invention is to provide a substrate bottle loading mechanism and method to solve the problem of relatively low substrate bottle loading efficiency in related art.

In order to achieve the above objective, some embodiments of the present invention provide a substrate bottle loading mechanism, including: a bracket, wherein the bracket is provided with an accommodating groove configured to accommodate a substrate bottle; a liquid absorbing rod assembly, wherein the liquid absorbing rod assembly is connected to the bracket in a lifting manner, and at least a part of the liquid absorbing rod assembly extends into the substrate bottle to perform a liquid absorbing operation; a position detection element, wherein the position detection element is disposed on the liquid absorbing rod assembly and is configured to detect whether the substrate bottle is located in the accommodating groove; and a reading and writing assembly, wherein the substrate bottle is provided with an electronic tag, the reading and writing assembly is disposed corresponding to the electronic tag, and after the substrate bottle is placed in the accommodating groove, the reading and writing assembly reads a substrate information stored in the electronic tag.

In some embodiments, the substrate bottle loading mechanism further includes a guide rail, the guide rail is vertically disposed on a side plate of the bracket, and the liquid absorbing rod assembly is slidably connected to the guide rail.

In some embodiments, the liquid absorbing rod assembly includes: a liquid absorbing rod, wherein a top end of the liquid absorbing rod is connected to a substrate bottle cap; a connecting plate, wherein the connecting plate is connected to the bracket in a lifting manner, and the substrate bottle cap is connected to a top end of the connecting plate; and a mounting seat, wherein one side of the mounting seat is connected to the connecting plate and is provided with a through hole configured to avoid the substrate bottle, the liquid absorbing rod penetrates in the through hole, and the position detection element is located on a hole wall of the through hole.

In some embodiments, the bracket includes a top plate, the top plate is provided with an avoidance hole configured to avoid the liquid absorbing rod assembly, and the mounting seat is detachably connected to the top plate.

In some embodiments, the mounting seat is provided with a snap-fit member, the top plate is correspondingly provided with a recess member, and the snap-fit member is snap-fitted with the recess member, and the liquid absorbing rod assembly is connected and fixed to the top plate after moving upward for a preset distance.

In some embodiments, at least a part of the reading and writing assembly is disposed in the accommodating groove, and the electronic tag is disposed at a bottom of the substrate bottle; or at least a part of the reading and writing assembly is disposed on a side plate of the bracket, and the electronic tag is disposed on a circumferential side of the substrate bottle.

In some embodiments, the accommodating groove is provided with a side opening, and the side opening is located on a side away from the side plate of the bracket.

In some embodiments, a plurality of accommodating grooves and a plurality of liquid absorbing rod assemblies are provided, and the plurality of accommodating grooves are disposed at intervals and are in one-to-one correspondence to the plurality of liquid absorbing rod assemblies respectively.

Some other embodiments of the present invention provide a substrate bottle loading method, applied by the above substrate bottle loading mechanism, including: detecting whether a substrate is loaded; if the substrate is loaded, repeatedly obtaining a load state of the substrate, and if the substrate is not loaded, sequentially obtaining a trigger state of each position detection element; if the current position detection element is triggered, enabling the reading and writing assembly to read the substrate information in the electronic tag on the substrate bottle, loading the substrate of the current substrate bottle by the liquid absorbing rod assembly, and determining a trigger state of the next position detection element until all substrates are loaded; if the current position detection element is not triggered, directly determining whether the next position detection element is triggered; and after sequentially determining trigger states of all position detection elements, repeating the above steps.

In some embodiments, the loading method further includes: if the electronic tag on the current substrate bottle fails to read, controlling an alarm assembly to send an alarm signal, and determining a trigger state of the next position detection element.

In some embodiments, the loading method further includes: if the last position detection element is not triggered, re-detecting whether the substrate is loaded.

In some embodiments, the loading method further includes: if the substrate of the last substrate bottle is loaded or the electronic tag on the last substrate bottle fails to read, re-detecting whether the substrate is loaded.

In some embodiments, the loading method further includes: if the trigger state of the current position detection element changes from triggered to not triggered, stopping an entire loading process, and reading the substrate information in the electronic tag on the current substrate bottle at a preset time interval; and if the reading fails, deleting the current substrate information and unloading the current substrate, and if the reading is successful, keeping a stopped state.

By applying the technical solutions of the present invention, the substrate bottle loading mechanism includes the bracket, the liquid absorbing rod assembly, the position detection element, and the reading and writing assembly, the bracket is provided with the accommodating groove configured to accommodate the substrate bottle; the liquid absorbing rod assembly is connected to the bracket in the lifting manner, and at least a part of the liquid absorbing rod assembly extends into the substrate bottle to perform a liquid absorbing operation; the position detection element is disposed on the liquid absorbing rod assembly and is configured to detect whether the substrate bottle is located in the accommodating groove; and the substrate bottle is provided with the electronic tag, the reading and writing assembly is disposed corresponding to the electronic tag, and after the substrate bottle is placed in the accommodating groove, the reading and writing assembly reads the substrate information stored in the electronic tag. In this way, the substrate information is stored by the electronic tag and is read by the reading and writing assembly, so that an influence of the environment on the reading of the substrate information may be avoided; and a placing state of the substrate bottle may be obtained in real time according to the position detection element, so as to remind users when detecting an abnormal fetching behavior of the substrate bottle to avoid loss and greatly improve a loading accuracy of the substrate bottle, thereby avoiding an influence of scanning failure or incorrect scanning and loading on the loading efficiency, ensuring that the substrate bottle loading mechanism has relatively high substrate bottle loading efficiency, and solving the problem of relatively low substrate bottle loading efficiency in related art.

### Brief Description of the Drawings

The accompanying drawings of the specification, constituting a part of the present invention, are used to provide a further understanding for the present invention. Exemplary embodiments of the present invention and descriptions thereof are used to explain the present invention, but do not constitute any improper limitation on the present invention. In the accompanying drawings,
Fig. 1 shows a schematic structural diagram of a substrate bottle loading mechanism in an embodiment of the present invention;
Fig. 2 shows a schematic structural diagram of a liquid absorbing rod assembly in an embodiment of the present invention;
Fig. 3 shows a schematic structural diagram of a substrate bottle in an embodiment of the present invention;
Fig. 4 shows a flowchart of a substrate bottle loading method in an embodiment of the present invention;
Fig. 5 shows s schematic diagram of a loading process of a substrate bottle loading method in an embodiment of the present invention; and
Fig. 6 shows a schematic diagram of electrical connection between a reading and writing assembly and a position detection element in an embodiment of the present invention.

The above accompanying drawings have the following reference numerals:
10. bracket; 11. side plate; 12. top plate; 121. avoidance hole; 13. base; 131. accommodating groove; 20. liquid absorbing rod assembly; 21. liquid absorbing rod; 22. substrate bottle cap; 23. connecting plate; 24. mounting seat; 241. through hole; 30. position detection element; 40. substrate bottle; 50. electronic tag; 60. guide rail; 70. slide block; 80. snap-fit member; 90. recess member; 100. supporting seat.

### Detailed Description of the Embodiments

It should be noted that in the case of no conflict, embodiments in the present invention and features in the embodiments may be combined with each other. The present invention will be described in detail below with reference to the accompanying drawings in conjunction with the embodiments.

It should be noted that unless otherwise specified, all technical and scientific terms used in the present invention have the same meanings as commonly understood by those skilled in the art of the present invention.

In the present invention, unless otherwise specified, the used directional words such as "upper, lower, top and bottom" are usually related to the directions shown in the accompanying drawings, or related to the upright, vertical or gravity directions of components. Similarly, for the convenience of understanding and description, the "inside and outside" refer to the inside and outside relative to the contour of each component, but the above directional words are not intended to limit the present invention.

It is apparent that the embodiments described above are only a part of the embodiments of the present invention, but are not all of the embodiments. All other embodiments obtained by those of ordinary skill in the art based on the embodiments in the present invention without creative efforts shall fall within the scope of protection of the present invention.

In order to solve the problem of relatively low substrate bottle loading efficiency in related art, the present invention provides a substrate bottle loading mechanism and method.

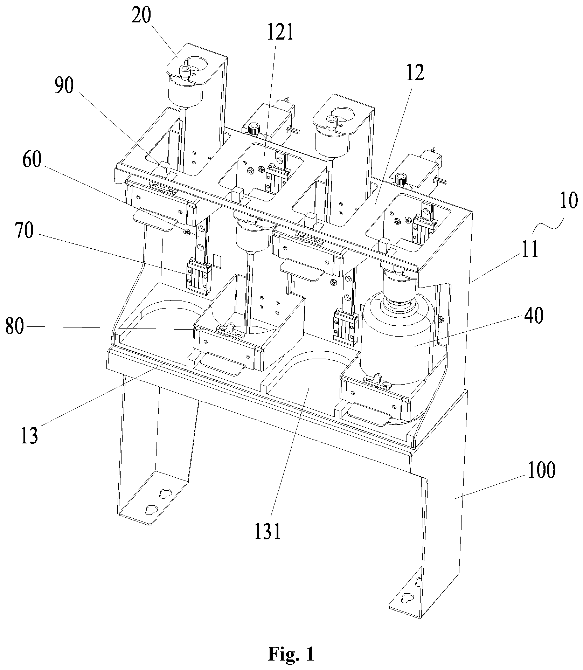

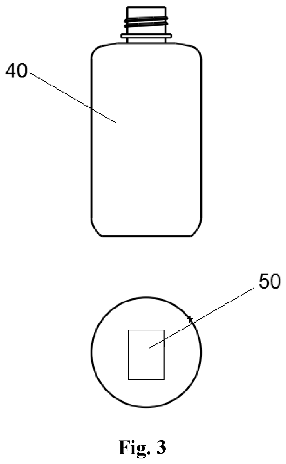

As shown in Figs. 1-3, the substrate bottle loading mechanism includes a bracket 10, a liquid absorbing rod assembly 20, a position detection element 30, and a reading and writing assembly. The bracket 10 is provided with an accommodating groove 131 configured to accommodate a substrate bottle 40. The liquid absorbing rod assembly 20 is connected to the bracket 10 in a lifting manner, and at least a part of the liquid absorbing rod assembly 20 extends into the substrate bottle 40 to perform a liquid absorbing operation. The position detection element 30 is disposed on the liquid absorbing rod assembly 20 and is configured to detect whether the substrate bottle 40 is located in the accommodating groove 131. The substrate bottle 40 is provided with an electronic tag 50, the reading and writing assembly is disposed corresponding to the electronic tag 50, and after the substrate bottle 40 is placed in the accommodating groove 131, the reading and writing assembly reads a substrate information stored in the electronic tag 50.

The substrate bottle loading mechanism is provided and includes the bracket 10, the liquid absorbing rod assembly 20, the position detection element 30, and the reading and writing assembly, wherein the bracket 10 is provided with the accommodating groove 131 configured to accommodate the substrate bottle 40; the liquid absorbing rod assembly 20 is connected to the bracket 10 in a lifting manner, and at least a part of the liquid absorbing rod assembly 20 extends into the substrate bottle 40 to perform a liquid absorbing operation; the position detection element 30 is disposed on the liquid absorbing rod assembly 20 and is configured to detect whether the substrate bottle 40 is located in the accommodating groove 131; and the substrate bottle 40 is provided with the electronic tag 50, the reading and writing assembly is disposed corresponding to the electronic tag 50, and after the substrate bottle 40 is placed in the accommodating groove 131, the reading and writing assembly reads the substrate information stored in the electronic tag 50. In this way, the substrate information is stored by the electronic tag 50 and is read by the reading and writing assembly, so that an influence of the environment on the reading of the substrate information may be avoided; and a placing state of the substrate bottle 40 may be obtained in real time according to the position detection element 30, so as to remind users when detecting an abnormal fetching behavior of the substrate bottle 40 to avoid loss and greatly improve a loading accuracy of the substrate bottle 40, thereby avoiding an influence of scanning failure or incorrect scanning and loading on the loading efficiency, and ensuring that the substrate bottle loading mechanism has relatively high substrate bottle loading efficiency.

In the embodiment, as shown in Fig. 1, the bracket 10 includes a side plate 11, a top plate 12 and a base 13, and the bracket 10 is in a C-shape as a whole, that is, the top plate 12 and the base 13 are corresponding in a vertical direction and are connected to upper and lower ends of the side plate 11 respectively at one end, and an opening faces a side. The accommodating groove 131 is located on the base 13. Further, the accommodating groove 131 is provided with a side opening, and the side opening is located on a side away from the side plate 11. Through the above arrangement, it is convenient for a user to horizontally push the substrate bottle 40 into the accommodating groove 131 from the side.

As shown in Fig. 1, the substrate bottle loading mechanism further includes a guide rail 60. The guide rail 60 is vertically disposed on the side plate 11, and the liquid absorbing rod assembly 20 is slidably connected to the guide rail 60.

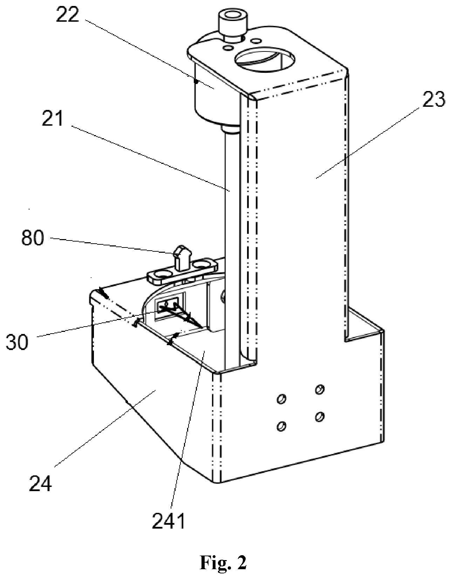

As shown in Fig. 2, the liquid absorbing rod assembly 20 includes a liquid absorbing rod 21, a connecting plate 23, and a mounting seat 24. A top end of the liquid absorbing rod 21 is connected to a substrate bottle cap 22, so that after the liquid absorbing rod 21 extends into the substrate bottle 40, the substrate bottle cap 22 blocks the substrate bottle 40 to isolate the air. The connecting plate 23 is connected to the bracket 10 in a lifting manner, and the substrate bottle cap 22 is connected to a top end of the connecting plate 23. One side of the mounting seat 24 is connected to the connecting plate 23 and is provided with a through hole 241 configured to avoid the substrate bottle 40, the liquid absorbing rod 21 penetrates in the through hole 241, and the position detection element 30 is located on a hole wall of the through hole 241.

Specifically, as shown in Fig. 1, the substrate bottle loading mechanism further includes a slide block 70, the connecting plate 23 is vertically disposed, the slide block 70 is connected and fixed to the connecting plate 23 through screws, and the slide block 70 is slidably connected to the guide rail 60, thereby achieving a slidable connection between the liquid absorbing rod assembly 20 and the guide rail 60. Further, the top end of the connecting plate 23 is provided with a cantilever, and the cantilever is located above the through hole 241 and is connected to the substrate bottle cap 22. The mounting seat 24 is located at a bottom of the liquid absorbing rod assembly 20, that is, connected to a bottom end of the connecting plate 23. As a whole, the mounting seat 24 is perpendicular to the connecting plate 23. It can be understood that after the substrate bottle 40 is placed in the accommodating groove 131, the liquid absorbing rod assembly 20 moves downward to enable the liquid absorbing rod 21 to extend into the substrate bottle 40, the substrate bottle cap 22 blocks the bottle opening of the substrate bottle 40, the mounting seat 24 is sleeved on the substrate bottle 40, and in this case, the position detection element 30 is blocked by the substrate bottle 40, so that the position detection element 30 detects a presence of the substrate bottle 40.

As shown in Fig. 1, the top plate 12 is provided with an avoidance hole 121 configured to avoid the liquid absorbing rod assembly 20, and the mounting seat 24 is detachably connected to the top plate 12. Specifically, the mounting seat 24 is provided with a snap-fit member 80, the top plate 12 is correspondingly provided with a recess member 90, and the snap-fit member 80 is snap-fitted with the recess member 90, so that the liquid absorbing rod assembly 20 is connected and fixed to the top plate 12 after moving upward for a preset distance. That is to say, before the liquid absorbing rod assembly 20 is put down, the liquid absorbing rod assembly 20 remains connected and fixed to the top plate 12; and after the substrate bottle 40 is placed in the accommodating groove 131, a snap-fitted and blocked connection between the liquid absorbing rod assembly 20 and the top plate 12 is released, the liquid absorbing rod assembly 20 is moved downward to enable the liquid absorbing rod 21 to extend into the substrate bottle 40, and the position detection element 30 may detect the substrate bottle 40.

In the embodiment, the position detection element 30 is an optical coupling sensor, and further is a reflective optical coupler. The position detection element 30 may also be a travel switch, a Hall position sensor, a capacitive position sensor, an ultrasonic position sensor, or the like, which may be selected according to actual needs.

In the embodiment, at least a part of the reading and writing assembly is disposed in the accommodating groove 131, and the electronic tag 50 is disposed at a bottom of the substrate bottle 40. The at least a part of the reading and writing assembly may also be disposed on the side plate 11 of the bracket 10, and the electronic tag 50 may also be disposed on a circumferential side of the substrate bottle 40. A choice may be made according to actual needs.

In order to improve the loading efficiency, a plurality of accommodating grooves 131 and a plurality of liquid absorbing rod assemblies 20 are provided, and the plurality of accommodating grooves 131 are disposed at intervals and are in one-to-one correspondence to the plurality of liquid absorbing rod assemblies 20 respectively. It can be understood that the substrate bottles 40, position detection elements 30, electronic tags 50 and antennas are also in one-to-one correspondence to the plurality of accommodating grooves 131. In the embodiment, four accommodating grooves 131 are provided, and correspondingly, four other above components are provided respectively.

In the embodiment, the electronic tag 50 is an RFID (Radio Frequency Identification) tag. Correspondingly, the reading and writing assembly includes an antenna disposed on the bracket 10. Specifically, the antenna is located in the accommodating groove 131. The electronic tag 50 may also be an NFC (Near Field Communication) tag, an inductive tag, or the like, which may be selected according to actual needs.

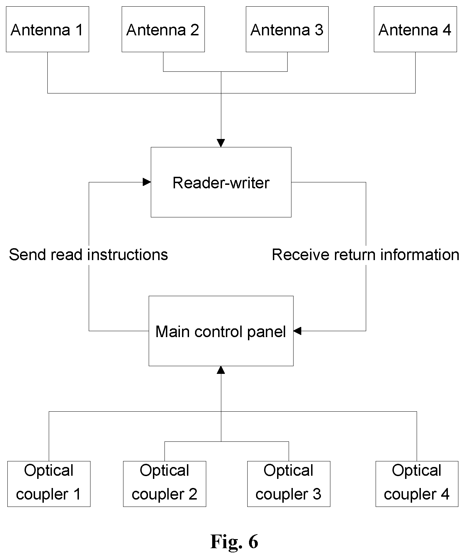

As shown in Fig. 6, in the embodiment, the reading and writing assembly further includes a multi-channel RFID reader-writer. The multi-channel RFID reader-writer is connected to a main control panel of an in vitro diagnostic analyzer through a communication line, the main control panel is configured to receive and process data, the antenna is connected to the multi-channel RFID reader-writer through an adapter line, the multi-channel RFID reader-writer sends and receives signals through the antenna, and different channels correspond to different antennas to prevent interference. A side of the antenna that sends and receives signals faces upward. When the substrate bottle 40 is placed and the liquid absorbing rod assembly 20 is put down, the optical coupling sensor may be blocked to indicate that the substrate is placed, the information may be read, and the substrate may be loaded.

As shown in Fig. 1, the substrate bottle loading mechanism further includes a supporting seat 100, and the bracket 10 is disposed on the supporting seat, so that the bracket 10 has a certain height so as to be convenient for users to operate.

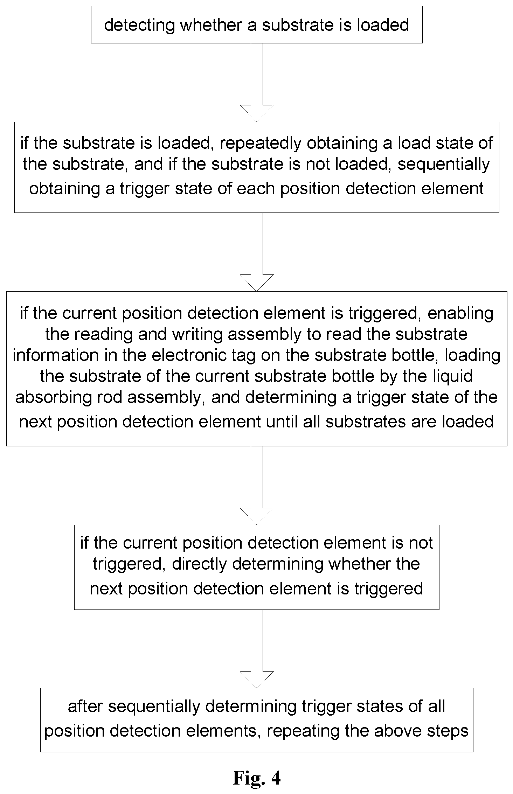

As shown in Fig. 4, the present invention further provides a substrate bottle loading method, applied by the above substrate bottle loading mechanism, including: detecting whether a substrate is loaded; if the substrate is loaded, repeatedly obtaining a load state of the substrate, and if the substrate is not loaded, sequentially obtaining a trigger state of each position detection element 30; if the current position detection element 30 is triggered, enabling the reading and writing assembly to read the substrate information in the electronic tag 50 on the substrate bottle 40, loading the substrate of the current substrate bottle 40 by the liquid absorbing rod assembly 20, and determining a trigger state of the next position detection element 30 until all substrates are loaded; if the current position detection element 30 is not triggered, directly determining whether the next position detection element 30 is triggered; and after sequentially determining trigger states of all position detection elements 30, repeating the above steps.

In the embodiment, the loading method further includes: if the electronic tag 50 on the current substrate bottle 40 fails to read, controlling an alarm assembly to send an alarm signal, and determining a trigger state of the next position detection element 30.

In the embodiment, the loading method further includes: if the last position detection element 30 is not triggered, re-detecting whether the substrate is loaded.

In the embodiment, the loading method further includes: if the substrate of the last substrate bottle 40 is loaded or the electronic tag 50 on the last substrate bottle 40 fails to read, re-detecting whether the substrate is loaded.

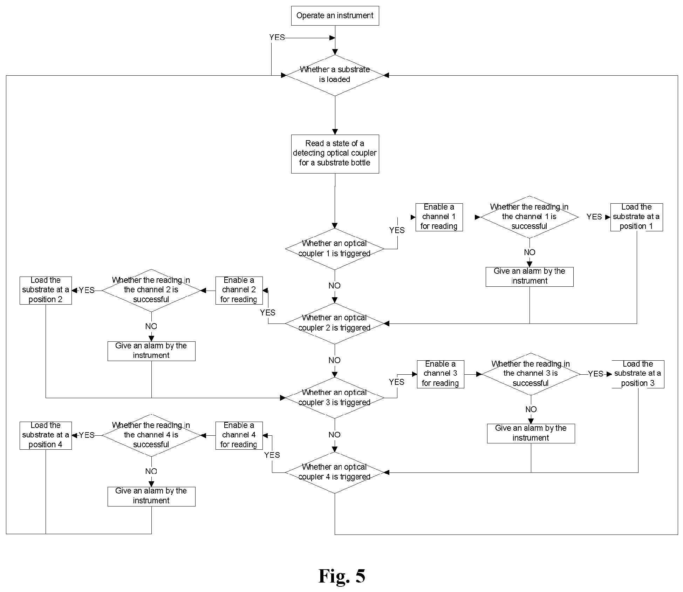

Fig. 5 shows a schematic diagram of a specific loading process using four substrate bottles 40 as an example in the embodiment. Specifically, an in vitro diagnostic analyzer starts to operate to detect whether a substrate is loaded, and then, state signals of four optical couplers are read in sequence. First, whether the first optical coupler is triggered is determined, that is, whether the first substrate bottle 40 is placed in position; and if the first optical coupler is triggered, a first channel of the reading and writing assembly is enabled to read the substrate information in the first electronic tag 50. Furthermore, whether the reading is successful is determined; if the reading is successful, the substrate of the first substrate bottle 40 is loaded; if the reading fails, an alarm signal is sent by the alarm assembly; and then, whether the second optical coupler is triggered is determined until the fourth optical coupler is determined. If the fourth optical coupler is not triggered, whether the substrate is loaded is directly detected again, and the above steps are repeated. In addition, if the loading of the fourth substrate bottle 40 is completed or the fourth electronic tag 50 fails to read, whether the substrate is loaded is directly detected again, and the above steps are repeated. That is to say, the in vitro diagnostic analyzer in the embodiment will continuously detect whether the substrate is loaded and repeat the above loading method, so as to ensure the monitoring of the substrate bottles 40.

In the embodiment, the loading method further includes: if the trigger state of the current position detection element 30 changes from triggered to not triggered, stopping an entire loading process, and reading the substrate information in the electronic tag 50 on the current substrate bottle 40 at a preset time interval; and if the reading fails, deleting the current substrate information and unloading the current substrate, and if the reading is successful, keeping a stopped state.

That is to say, when the liquid absorbing rod assembly 20 is raised, the optical coupling sensor changes to be in an unblocked state, the operation of the in vitro diagnostic analyzer is stopped, and in this case, the RFID tag information is read every 10s; if the RFID tag is not detected, the current substrate information is deleted, and the substrate is unloaded; and if the RFID tag is detected, the operation of the in vitro diagnostic analyzer is stopped, but the substrate information is not deleted and the substrate is not unloaded. Through the above method, during a testing process, the in vitro diagnostic analyzer may continuously detect the state of the substrate bottle 40 and make corresponding processing based on the signal change of the optical coupler and the reading result of the RFID tag.

From the above description, it can be seen that the above embodiments of the present invention achieve the following technical effects: the substrate bottle loading mechanism is provided and includes a bracket 10, the liquid absorbing rod assembly 20, the position detection element 30, and the reading and writing assembly, wherein the bracket 10 is provided with the accommodating groove 131 configured to accommodate the substrate bottle 40; the liquid absorbing rod assembly 20 is connected to the bracket 10 in a lifting manner, and at least a part of the liquid absorbing rod assembly 20 extends into the substrate bottle 40 to perform a liquid absorbing operation; the position detection element 30 is disposed on the liquid absorbing rod assembly 20 and is configured to detect whether the substrate bottle 40 is located in the accommodating groove 131; and the substrate bottle 40 is provided with the electronic tag 50, the reading and writing assembly is disposed corresponding to the electronic tag 50, and after the substrate bottle 40 is placed in the accommodating groove 131, the reading and writing assembly reads the substrate information stored in the electronic tag 50. In this way, the substrate information is stored by the electronic tag 50 and is read by the reading and writing assembly, so that an influence of the environment on the reading of the substrate information may be avoided; and a placing state of the substrate bottle 40 may be obtained in real time according to the position detection element 30, so as to remind users when detecting an abnormal fetching behavior of the substrate bottle 40 to avoid loss and greatly improve a loading accuracy of the substrate bottle 40, thereby avoiding an influence of scanning failure or incorrect scanning and loading on the loading efficiency, and ensuring that the substrate bottle loading mechanism has relatively high substrate bottle loading efficiency.

It should be noted that the terms used here are merely used to describe specific embodiments, but are not intended to limit exemplary embodiments according to the present invention. As used here, unless otherwise explicitly stated in the context, a singular form is also intended to include a plural form. In addition, it should also be understood that when the terms "contain" and/or "include" are used in the specification, they indicate the presence of features, steps, operations, devices, assemblies, and/or combinations thereof.

It should be noted that the terms "first", "second", and the like in the specification and claims of the present invention and the above accompanying drawings are used to distinguish similar objects, but are not intended to describe a particular sequence or a precedence order. It should be understood that the data used in this way can be interchanged in appropriate circumstances, so that the embodiment of the present invention described here can be implemented in a sequence other than those illustrated or described here.

The above descriptions are merely preferred embodiments of the present invention, but are not intended to limit the present invention. For those skilled in the art, the present invention may have various modifications and changes. Any modification, equivalent replacement, improvement, and the like made within the spirit and principle of the present invention shall fall within the scope of protection of the present invention.

## Claims

1. A substrate bottle loading mechanism, comprising:
a bracket (10), wherein the bracket (10) is provided with an accommodating groove (131) configured to accommodate a substrate bottle (40);
a liquid absorbing rod assembly (20), wherein the liquid absorbing rod assembly (20) is connected to the bracket (10) in a lifting manner, and at least a part of the liquid absorbing rod assembly (20) extends into the substrate bottle (40) to perform a liquid absorbing operation;
a position detection element (30), wherein the position detection element (30) is disposed on the liquid absorbing rod assembly (20) and is configured to detect whether the substrate bottle (40) is located in the accommodating groove (131); and
a reading and writing assembly, wherein the substrate bottle (40) is provided with an electronic tag (50), the reading and writing assembly is disposed corresponding to the electronic tag (50), and after the substrate bottle (40) is placed in the accommodating groove (131), the reading and writing assembly reads a substrate information stored in the electronic tag (50).

2. The substrate bottle loading mechanism as claimed in claim 1, wherein the substrate bottle loading mechanism further comprises a guide rail (60), the guide rail (60) is vertically disposed on a side plate (11) of the bracket (10), and the liquid absorbing rod assembly (20) is slidably connected to the guide rail (60).

3. The substrate bottle loading mechanism as claimed in claim 1, wherein the liquid absorbing rod assembly (20) comprises:
a liquid absorbing rod (21), wherein a top end of the liquid absorbing rod (21) is connected to a substrate bottle cap (22);
a connecting plate (23), wherein the connecting plate (23) is connected to the bracket (10) in a lifting manner, and the substrate bottle cap (22) is connected to a top end of the connecting plate (23); and
a mounting seat (24), wherein one side of the mounting seat (24) is connected to the connecting plate (23) and is provided with a through hole (241) configured to avoid the substrate bottle (40), the liquid absorbing rod (21) penetrates in the through hole (241), and the position detection element (30) is located on a hole wall of the through hole (241).

4. The substrate bottle loading mechanism as claimed in claim 3, wherein the bracket (10) comprises a top plate (12), the top plate (12) is provided with an avoidance hole (121) configured to avoid the liquid absorbing rod assembly (20), and the mounting seat (24) is detachably connected to the top plate (12).

5. The substrate bottle loading mechanism as claimed in claim 4, wherein the mounting seat (24) is provided with a snap-fit member (80), the top plate (12) is correspondingly provided with a recess member (90), and the snap-fit member (80) is snap-fitted with the recess member (90), and the liquid absorbing rod assembly (20) is connected and fixed to the top plate (12) after moving upward for a preset distance.

6. The substrate bottle loading mechanism as claimed in claim 3, wherein the top end of the connecting plate (23) is provided with a cantilever, and the cantilever is located above the through hole (241) and is connected to the substrate bottle cap (22).

7. The substrate bottle loading mechanism as claimed in claim 1, wherein
at least a part of the reading and writing assembly is disposed in the accommodating groove (131), and the electronic tag (50) is disposed at a bottom of the substrate bottle (40); or
at least a part of the reading and writing assembly is disposed on a side plate (11) of the bracket (10), and the electronic tag (50) is disposed on a circumferential side of the substrate bottle (40).

8. The substrate bottle loading mechanism as claimed in claim 1, wherein the accommodating groove (131) is provided with a side opening, and the side opening is located on a side away from the side plate (11) of the bracket (10).

9. The substrate bottle loading mechanism as claimed in claim 1, wherein a plurality of accommodating grooves (131) and a plurality of liquid absorbing rod assemblies (20) are provided, and the plurality of accommodating grooves (131) are disposed at intervals and are in one-to-one correspondence to the plurality of liquid absorbing rod assemblies (20) respectively.

10. The substrate bottle loading mechanism as claimed in claim 2, wherein the substrate bottle loading mechanism further comprises a slide block (70), and the slide block (70) is slidably connected to the guide rail (60).

11. The substrate bottle loading mechanism as claimed in claim 1, wherein the position detection element (30) is any one of an optical coupling sensor, a travel switch, a Hall position sensor, a capacitive position sensor, or an ultrasonic position sensor.

12. The substrate bottle loading mechanism as claimed in claim 1, wherein
at least a part of the reading and writing assembly is disposed in the accommodating groove (131), and the electronic tag (50) is disposed at a bottom of the substrate bottle (40); or
at least a part of the reading and writing assembly is disposed on a side plate (11) of the bracket (10), and the electronic tag (50) is disposed on a circumferential side of the substrate bottle (40).

13. A substrate bottle loading method, applied by the substrate bottle loading mechanism as claimed in any one of claims 1 to 12, comprising:
detecting whether a substrate is loaded;
if the substrate is loaded, repeatedly obtaining a load state of the substrate, and if the substrate is not loaded, sequentially obtaining a trigger state of each position detection element (30);
if the current position detection element (30) is triggered, enabling the reading and writing assembly to read the substrate information in the electronic tag (50) on the substrate bottle (40), loading the substrate of the current substrate bottle (40) by the liquid absorbing rod assembly (20), and determining a trigger state of the next position detection element (30) until all substrates are loaded;
if the current position detection element (30) is not triggered, directly determining whether the next position detection element (30) is triggered; and
after sequentially determining trigger states of all position detection elements (30), repeating the above steps.

14. The substrate bottle loading method as claimed in claim 13, wherein the loading method further comprises:
if the electronic tag (50) on the current substrate bottle (40) fails to read, controlling an alarm assembly to send an alarm signal, and determining a trigger state of the next position detection element (30).

15. The substrate bottle loading method as claimed in claim 13, wherein the loading method further comprises:
if the last position detection element (30) is not triggered, re-detecting whether the substrate is loaded.

16. The substrate bottle loading method as claimed in claim 13, wherein the loading method further comprises:
if the substrate of the last substrate bottle (40) is loaded or the electronic tag (50) on the last substrate bottle (40) fails to read, re-detecting whether the substrate is loaded.

17. The substrate bottle loading method as claimed in claim 13, wherein the loading method further comprises:
if the trigger state of the current position detection element (30) changes from triggered to not triggered, stopping an entire loading process, and reading the substrate information in the electronic tag (50) on the current substrate bottle (40) at a preset time interval; and
if the reading fails, deleting the current substrate information and unloading the current substrate, and if the reading is successful, keeping a stopped state.
